(19) Europäisches Patentamt
European Patent Office
Office européen des brevets

(11) **EP 2 398 252 A1**

(12) **EUROPEAN PATENT APPLICATION**
published in accordance with Art. 153(4) EPC

(43) Date of publication:
**21.12.2011 Bulletin 2011/51**

(51) Int Cl.:
**H04R 3/00** (2006.01)          **G11B 20/02** (2006.01)
**G11B 27/02** (2006.01)

(21) Application number: **09839996.7**

(22) Date of filing: **12.02.2009**

(86) International application number:
**PCT/JP2009/052314**

(87) International publication number:
**WO 2010/092674 (19.08.2010 Gazette 2010/33)**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(71) Applicant: **Pioneer Corporation**
**Kanagawa 212-0031 (JP)**

(72) Inventor: **HATTORI, Akira**
**Tokyo 143-8564 (JP)**

(74) Representative: **Haley, Stephen**
**Gill Jennings & Every LLP**
**The Broadgate Tower**
**20 Primrose Street**
**London EC2A 2ES (GB)**

(54) **AUDIO SIGNAL MIXER**

(57)    The audio signal mixing device may be applied to a DJ equipment, for example. The audio signal mixing device obtains multiple audio signals, and obtains mixing ratio information which is information related to the mixing ratio of the multiple audio signals. The audio signal mixing device determines adjustment amounts of the inter-frequency-range level balance in a case that the multiple audio signals are mixed by the mixing ratio. Then, the audio signal mixing device mixes the multiple audio signals separately for each of the frequency ranges, adjusts the levels of the mixed signal for each of the frequency ranges, and adds the signals of each of the frequency ranges after the adjustment to output it as a mixed audio signal.

FIG. 2

EP 2 398 252 A1

**Description**

TECHNICAL FIELD

The present invention relates to a device for mixing audio signals of multiple channels.

BACKGROUND TECHNIQUE

There is known an audio signal mixing device which has a configuration of an audio mixer for two or more channels (CH) and which performs long mixing of music in accordance with an operational designation of a crossfader by a user (see. Patent Reference-1, for example).

In an audio signal mixing device as described above, audio signals of multiple channels are separately inputted to a DSP (Digital Signal Processor) in the audio signal mixing device, and the multiple audio signals are mixed in the DSP and outputted.

At this time, the audio signal mixing device performs level adjustment by using a mixing ratio parameter based on a position information of the orossfader, which is transmitted from a microcomputer in the audio signal mixing device.

Patent Preference-1: Japanese Patent Application Laid-open under No. H08-195068

DISCLOSURE OF INVENTION

PROBLEM TO BE SOLVED BY THE INVENTION

As described above, if the audio signal mixing device mixes the audio signals of multiple channels simply based on the position of the crossfader, a user may possibly feel that levels of the mixed sound are different in different frequency ranges.

As a premise that the above phenomenon occurs, it is necessary to consider that, when multiple music pieces are mixed by the above-described audio signal mixing device, the mixing operation is normally performed after adjusting tempos and/or beat positions of the music pieces to be mixed by a certain method. In this case, a sound "DON" of bass drum and an attack sound of bass, for which energy is concentrated at low-range, become easily in phase with each other between the audio signals of different musicpieces, and therefore the total volume becomes twice at maximum when the audio signals of two channels are simply mixed. However, with respect to the mid/high-range, since the audio signals are different, the correlation is low in view of a spectrum distribution at a certain timing, and therefore the volume does not become twice if those signals are simply mixed. As a result, the mixed audio signal is relatively emphasized at low-range and becomes uncomfortable to listen.

The above is an example of problems to be solved by the present invention. It is an object of the present invention to provide an audio signal mixing device capable of mixing multiple audio signals without losing a balance between different frequency ranges.

MEANS FOR SOLVING THE PROBLEM

The invention according to claim 1 is an audio signal mixing device including: an audio signal obtaining unit which obtains multiple audio signals; a mixing ratio obtaining unit which obtains a mixing ratio of the multiple audio signals; an adjustment amount determining unit which determines an adjustment amount of a level for each of frequency ranges in a case that the multiple audio signals are mixed by the mixing ratio; a signal mixing unit which mixes the multiple audio signals by the mixing ratio separately for each of the frequency ranges, and outputs a mixed signal for each of the frequency range; a level adjusting unit which performs a level adjustment of the mixed signal for each of the frequency ranges based on the adjustment amount; and an adding unit which adds the signals of each of the frequency ranges, after the level adjustment by the level adjusting unit, to output as a mixed audio signal.

The invention according to claim 6 is an audio signal mixing method for mixing multiple audio signals, including: an audio signal obtaining process which obtains the multiple audio signals; a mixing ratio obtaining process which obtains a mixing ratio of the multiple audio signals; an adjustment amount determining process which determines an adjustment amount of a level for each of frequency ranges in a case that the multiple audio signals are mixed by the mixing ratio; a signal mixing process which mixes the multiple audio signals by the mixing ratio separately for each of the frequency ranges, and outputs a mixed signal for each of the frequency ranges; a level adjusting process which performs a level adjustment of the mixed signal for each of the frequency ranges based on the adjustment amount; and an adding process which adds the signals of each of the frequency ranges, after the level adjustment by the level adjusting process, to output as a mixed audio signal.

BRIEF DESCRIPTION OF THE DRAWINGS

FIG. 1 is a diagram illustrating a physical structure of an audio signal mixing device.

FIG. 2 is a block diagram illustrating an internal configuration of a DSP according to a first embodiment.
FIGS. 3A to 3C are diagrams illustrating average levels of various signal level values.
FIG. 4 is a flowchart illustrating procedure of audio signal mixing method.
FIG. 5 is a block diagram illustrating an internal configuration of a DSP according to a second embodiment.
FIG. 6 is a block diagram illustrating an internal configuration of a DSP according to a third embodiment.

BRIEF DESCRIPTION OF REFERENCE NUMBERS

[0012]

| 1 | Audio signal mixing device |
|---|---|
| 2 | DSP |
| 3 | A/D converter |
| 4 | Microcomputer |
| 5 | Crossfader |
| 6 | D/A converter |
| 21 | Frequency range dividing filter |
| 22 | Optimum mixing level calculating unit |
| 24 | Frequency-range-separated level adjusting unit |
| 25 | Adder |

DETAILED DESCRIPTION OF THE PREFERRED EMBODIMENTS

According to one aspect of the present invention, there is provided an audio signal mixing device including: an audio signal obtaining unit which obtains multiple audio signals; a mixing ratio obtaining unit which obtains a mixing ratio of the multiple audio signals; an adjustment amount determining unit which determines an adjustment amount of a level for each of frequency ranges in a case that the multiple audio signals are mixed by the mixing ratio; a signal mixing unit which mixes the multiple audio signals by the mixing ratio separately for each of the frequency ranges, and outputs a mixed signal for each of the frequency range; a level adjusting unit which performs a level adjustment of the mixed signal for each of the frequency ranges based on the adjustment amount; and an adding unit which adds the signals of each of the frequency ranges, after the level adjustment by the level adjusting unit, to output as a mixed audio signal.

The above audio signal mixing device may be applied to a DJ equipment, for example. The audio signal mixing device obtains multiple audio signals, and obtains a mixing ratio information which is information related to a mixing ratio of the multiple audio signals. The audio signal mixing device determines the level adjustment amount for each of the frequency ranges in a case that the multiple audio signals are mixed by the mixing ratio. Then, the audio signal mixing device mixes the multiple audio signals separately for each of the frequency ranges, adjusts the level of the mixed signal by the determined level adjustment amount, and adds the signals of each of the frequency ranges, after the adjustment, to output as a mixed audio signal.

In this way, the audio signal mixing device calculates the level adjustment amount for each of the frequency ranges, adjusts the level balance between the frequency ranges, and outputs the mixed signal of the multiple audio signals. Therefore, the audio signal mixing device can provide sound, which does not give a user wrong feeling, without the adjustment operation by the user.

One mode of the audio signal mixing device further includes: an analyzing unit which analyzes frequency characteristics of the multiple audio signals and obtains level information for each of the frequency ranges; and a level variation ratio calculating unit which calculates a level variation ratio for each of the frequency ranges in a case that the multiple audio signals are mixed by the mixing ratio, by using the level information for each of the frequency ranges, and the adjustment amount determining unit determines the adjustment amount based on the level variation ratio.

In this mode, the frequency characteristics of the multiple audio signals are analyzed, and the level variation amount is calculated for each of the frequency ranges in a case that the multiple audio signals are mixed. Then, the level adjustment amount is determined based on the level variation amount. In this case, the audio signal mixing device analyzes the frequency characteristics of the audio signals obtained on the real time basis, and detects the balance variation before and after the mixing. Therefore, more appropriate adjustment amount can be calculated, and appropriate sound for the user can be provided.

In another mode, the audio signal mixing device further includes a beat position detecting unit which detects a beat position based on the multiple audio signals, and the level adjusting unit performs the level adjustment in a predetermined time period including the beat position. In this case, the audio signal mixing device detects a part where the level balance between the frequency ranges is generally easily lost, e.g., a part where the low-range level increases, by the beat position detecting unit, and performs the level adjustment around the part where the low-range level increases. Namely, the audio signal mixing device performs the calculation of the adjustment parameter only when the level balance between the frequency ranges is easily lost. Therefore, the burden on the calculation of the adjustment parameter and the processing of the level adjustment can be minimized, with preventing the balance between the frequency ranges from being lost.

In another mode, the audio signal mixing device further includes: a level information obtaining unit which obtains the level information of each of the frequency ranges based on the frequency characteristics of the multiple audio signals; and a level variation ratio calculating unit which calculates the level variation ratio for each of the frequency ranges in a case that the multiple audio signals are mixed by the mixing ratio, by using the level information for each frequency range, and the adjustment amount determining unit determines the adjustment amount based on the level variation ratio. In this case, since the audio signal mixing device does not have to perform the frequency characteristic analysis, the processing burden of the audio signal mixing device can be diminished.

In another mode of the above audio signal mixing device, the adjustment amount determining unit retains the adjustment amounts determined in advance. In this case, the configuration of the audio signal mixing device can be simplified. Therefore, an audio signal mixing device capable of adjusting the balance between the frequency ranges can be achieved by an apparatus which mainly includes analog circuits and in which high-performance parts such as a DSP (Digital Signal Processor) cannot be used.

In another aspect of the present invention, there is provided a n audio signal mixing method for mixing multiple audio signals, including: an audio signal obtaining process which obtains the multiple audio signals; a mixing ratio obtaining process which obtains a mixing ratio of the multiple audio signals; an adjustment amount determining process which determines an adjustment amount of a level for each of frequency ranges in a case that the multiple audio signals are mixed by the mixing ratio; a signal mixing process which mixes the multiple audio signals by the mixing ratio separately for each of the frequency ranges, and outputs a mixed signal for each of the frequency ranges; a level adjusting process which performs a level adjustment of the mixed signal for each of the frequency ranges based on the adjustment amount; and an adding process which adds the signals of each of the frequency ranges, after the level adjustment by the level adjusting process, to output as a mixed audio signal.

Also by the above audio signal mixing method, the level adjustment amount for each of the frequency ranges is calculated, the level balance between the frequency ranges is adjusted, and the mixed signal of the multiple audio signals is outputted. Therefore, the audio signal mixing device can provide sound, which does not give a user wrong feeling, without the adjustment operation by the user.

EMBODIMENTS

Preferred embodiments of the present invention will be described below with reference to the attached drawings.

[Outline Description]

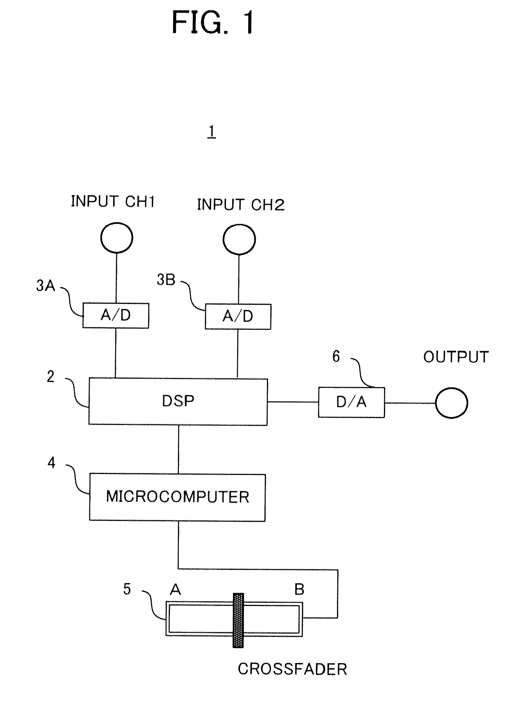

First, an outline of an audio signal mixing device according to the present invention will be described. FIG. 1 illustrates a basic configuration of an audio signal mixing device 1. As illustrated, the audio signal mixing device 1 includes a DSP (Digital Signal Processor), A/D converters 3A and 3B, a microcomputer 4, a crossfader 5 and a D/A converter 6.

When the audio signal mixing device 1 receives 2-channel audio reproduction signals from a CD (Compact Disk) player not shown or the like, the A/D converters 3A and 3B convert the received audio reproduction signals to digital signals and transmits the digital signals to the DSP 2.

The microcomputer 4 obtains the position information of the crossfader operated by a user, and transmits the position information to the DSP 2.

When the DSP 2 obtains the 2-channel digital signals from the A/D converters 3A and 3B and the position information of the crossfader (hereinafter referred to as "mixing ratio information") from the microcomputer 4, the DSP 2 first determines adjustment amounts of the level balance between the frequency ranges of the above 2-channel digital signals in the case that the 2-channel digital signals are mixed by the mixing ratio indicated by the mixing ratio information. Next, the DSP 2 mixes the 2-channel audio signals separately for each of the frequency ranges, and performs the level adjustment of the mixed signal based on the above adjustment amount. Then, the DSP 2 adds the signals of the frequency ranges after the level adjustment, and outputs an added signal.

As described above, since the audio signal mixing device 1 detects a balance variation between the frequency ranges of the 2-channel audio signals before and after the mixing to adjust the balance between the frequency ranges, the music pieces can be mixed without causing wrong feeling.

[1st Embodiment]

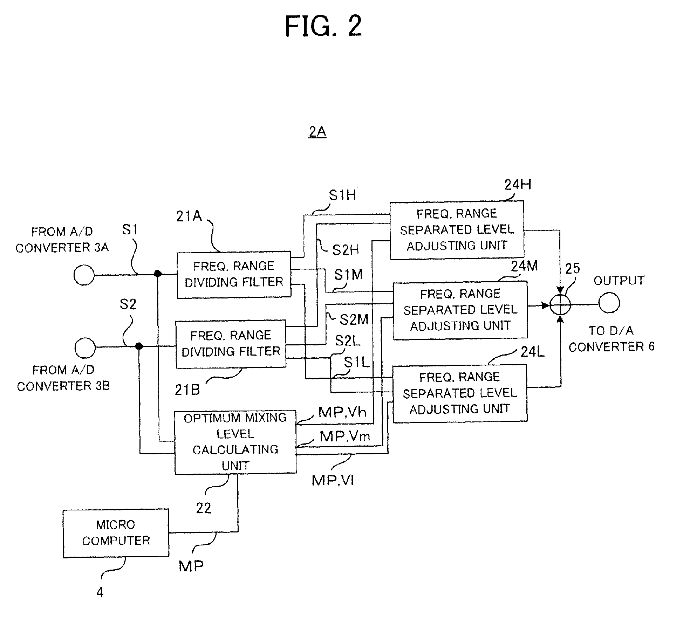

FIG. 2 illustrates a schematic configuration of a DSP 2A according to a first embodiment of the present invention. In this embodiment, the 2-channel audio signals S1 and S2 are inputted to the DSP 2A. Hereinafter, "channel" is also expressed as "CH".

The audio signal S1 which is a signal of an input channel CH1 is inputted from the A/D converter 3A to the DSP 2A, and is supplied to an optimum mixing level calculating unit 22 and a frequency range dividing filter 21A. The audio signal S2 which is a signal of an input channel CH2 is inputted from the A/D converter 3B to the DSP 2A, and is supplied to the optimum mixing level calculating unit 22 and a frequency range dividing filter 21B.

The mixing ratio information MP outputted by the microcomputer 4 is supplied to the optimum mixing level calculating unit 22.

The optimum mixing level calculating unit 22 performs frequency characteristic analysis for each of the audio signals S1 and S2, and calculates frequency-range-separated average level for three frequency ranges, i.e., the high-range, mid-range and low-range, of the audio signal of each channel.

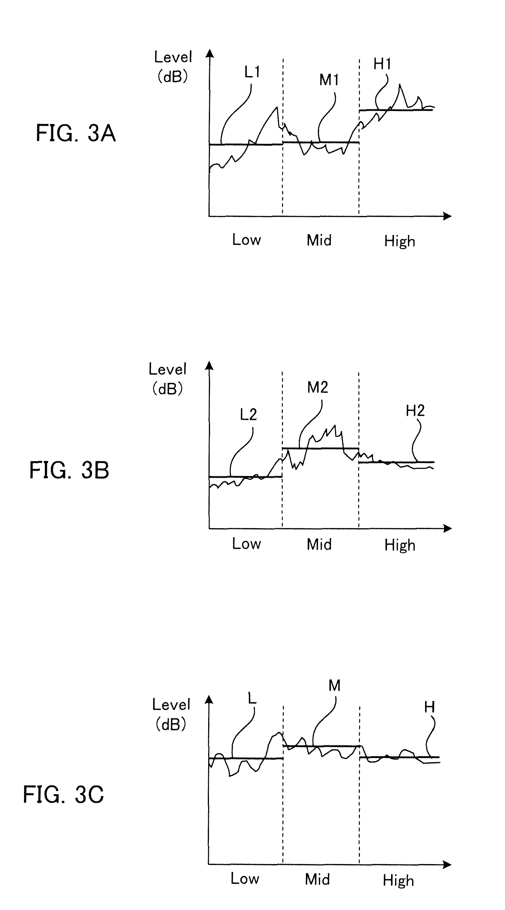

FIGS. 3A and 3B illustrate specific examples that the optimum mixing level calculating unit 22 calculates the frequency-range-separated average level of the audio signal of each channel. FIG. 3A illustrates a result that the optimum mixing level calculating unit 22 performs the frequency characteristic analysis on the audio signal S1, and FIG. 3B illustrates a result that the optimum mixing level calculating unit 22 performs the frequency characteristic analysis on the audio signal S2. In this case, the optimum mixing level calculating unit 22 calculates a high-range average level H1, a mid-range average level M1 and a low-range average level L1, which are the average levels of each of the high-range, the mid-range and the low-range, as the frequency-range-separated average levels, based on the result of the frequency characteristic analysis of the audio signal S1. In addition, the optimum mixing level calculating unit 22 calculates a high-range average level H2, a mid-range average level M2 and a low-range average level L2 as the frequency-range-separated average levels, based on the result of the frequency characteristic analysis of the audio signal S2. The average level here may be an amplitude level, but is desirably calculated as a RMS (Root Means Square) value (an effective value).

Next, the optimum mixing level calculating unit 22 generates a mixed signal by mixing the audio signals S1 and S2 in an overall frequency range based on the mixing ratio information MP. FIG. 3C illustrates a result of the frequency characteristic analysis of the mixed signal. Then, the optimum mixing level calculating unit 22 calculates the low-range average level L, the mid-range average level M and the high-range average level H, which are the average levels of three frequency ranges of the mixed signal. Here, the low-range average level L, the mid-range average level M and the high-range average level H indicate the level of each of the frequency range after actually mixing the audio signals S1 and S2.

Next, the optimum mixing level calculating unit 22 calculates a high-range mixing level LH obtained by mixing the high-range average levels H1 and H2 by the above mixing ratio, a mid-range mixing level LM obtained by mixing the mid-range average levels M1 and M2 by the above mixing ratio and a low-range mixing level LL obtained by mixing the low-range average levels L1 and L2 by the above mixing ratio. Here, the high-range mixing level LH, the mid-range mixing level LM and the low-range mixing level LL indicate the level of each of the frequency ranges before actually mixing the audio signals S1 and S2.

Then, the optimum mixing level calculating unit 22 calculates the variation ratio (hereinafter referred to as "level variation ratio") of the level before and after mixing the audio signals S1 and S2 separately for each of the frequency ranges. Specifically, the optimum mixing level calculating unit 22 calculates a ratio of the high-range average level H with respect to the high-range mixing level LH as a high-range level variation ratio H/LH, calculates a ratio of the mid-range average level M with respect to the mid-range mixing level LM as a mid-range level variation ratio M/LM and calculates a ratio of the low-range average level L with respect to the low-range mixing level LL as a low-range level variation ratio L/LL. Then, the optimum mixing level calculating unit 22 calculates a ratio between the high-range level variation ratio, the mid-range level variation ratio and the low-range level variation ratio as an inter-frequency-range variation ratio H/LH : M/LM : L/LL.

Now, assuming that the mixing ratio of the audio signal S1 and the audio signal S2, indicated by the mixing ratio information MP, is I: J, the mixing ratio A indicating the mixing ratio of the audio signal S1 can be expressed as A=I/ (I+J), and the mixing ratio B indicating the mixing ratio of the audio signal S2 can be expressed as B=J/(I+J). Therefore, the high-range mixing level LH, the mid-range mixing level LM and the low-range mixing level LL are given as follows:

$$\text{High-range mixing level } LH = A*H1 + B*H2$$

$$\text{Mid-range mixing level} \quad LM = A*M1 + B*M2$$

$$\text{Low-range mixing level} \quad LL = A*L1 + B*L2,$$

wherein the sign "*" means multiplication.

Therefore, the inter-frequency-range variation ratio is as follows.

$$\text{Inter-frequency-range variation ratio}$$
$$= H/LH : M/LM : L/LL$$
$$= H/(A*H1+B*H2): M/(A*M1+B*M2) : L/(A*L1+B*L2).$$

The optimum mixing level calculating unit 22 calculates adjustment parameters Vh, Vm and Vl such that the inter-frequency-range variation ratio becomes 1:1:1. Then, the optimummixing level calculating unit 22 transmits the above mixing ratio information MP and the adjustment parameters Vh, Vm and Vl to the frequency-range-separated level adjusting units 24H, 24M and 24L.

Here, the description will be given of the reason why the adjustment parameters Vh, Vm and Vl are calculated such that the inter-frequency-range variation ratio becomes 1:1:1. As described above, the high-range level variation ratio H/LH indicates the variation ratio of the high-range level before and after mixing the audio signals S1 and S2. Similarly, the mid-range level variation ratio M/LM indicates the variation ratio of the mid-range level before and after mixing the audio signals S1 and S2, and the low-range level variation ratio L/LL indicates the variation ratio of the low-range level before and after mixing the audio signals S1 and S2. Therefore, if the adjustment parameters Vh, Vm and Vl are determined such that the inter-frequency-range variation ratio becomes 1:1:1 and the levels of the mixed audio signals are adjusted based on them, the level variation ratio in each of the frequency ranges can be maintained before and after mixing the audio signals S1 and S2. Namely, the level at each of the frequency ranges after the mixing becomes equal to the level at each of the frequency ranges before the mixing, and the level balance of each of the frequency ranges is maintained before and after the mixing. Thereby, it is possible to prevent such a deficiency that a certain frequency range (generally low-range) is inappropriately emphasized by mixing the audio signals.

Meanwhile, the frequency range dividing filters 21A and 21B divide the inputted audio signal into three frequency ranges, i.e., the high-range, the mid-range and the low-range, and transmits a high-range component signal, a mid-range component signal and a low-range component signal to the frequency-range-separated level adjusting units 24H, 24M and 24L.

Specifically, the frequency range dividing filter 21A supplies the high-range component signal S1H of the audio signal S1 to the frequency-range-separated level adjusting unit 24H, supplies the mid-range component signal S1M to the frequency-range-separated level adjusting unit 24M, and supplies the low-range component signal S1L to the frequency-range-separated level adjusting unit 24L. Similarly, the frequency range dividing filter 21B supplies the high-range component signal S2H of the audio signal S2 to the frequency-range-separated level adjusting unit 24H, supplies the mid-range component signal S2M to the frequency-range-separated level adjusting unit 24M, and supplies the low-range component signal S2L to the frequency-range-separated level adjusting unit 24L.

The frequency-range-separated level adjusting unit 24H adjusts the level of the high-range component of the audio signal. The frequency-range-separated level adjusting unit 24M adjusts the level of the mid-range component of the audio signal, and the frequency-range-separated level adjusting unit 24L adjusts the level of the low-range component of the audio signal.

Specifically, the frequency-range-separated level adjusting unit 24H obtains the high-range component signal S1H of the audio signal S1 from the frequency range dividing filter 21A and obtains the high-range component signal S2H of the audio signal S2 from the frequency range dividing filter 21B. In addition, the frequency-range-separated level adjusting unit 24H obtains the mixing ratio information MP and the adjustment parameter Vh from the optimum mixing level calculating unit 22. Then, the frequency-range-separated level adjusting unit 24H mixes the high-range component signal S1H of the audio signal S1 and the high-range component signal S2H of the audio signal S2 by the mixing ratio (I:J) indicated by the mixing ratio information MP, and multiplies the mixed signal by the adjustment parameter Vh.

The frequency-range-separated level adjusting unit 24M obtains the mid-range component signal S1M of the audio signal S1 from the frequency range dividing filter 21A and obtains the mid-range component signal S2M of the audio signal S2 from the frequency range dividing filter 21B. In addition, the frequency-range-separated level adjusting unit 24M obtains the mixing ratio information MP and the adjustment parameter Vm from the optimum mixing level calculating unit 22. Then, the frequency-range-separated level adjusting unit 24M mixes the mid-range component signal S1M of the audio signal S1 and the mid-range component signal S2M of the audio signal S2 by the mixing ratio indicated by the mixing ratio information MP, and multiplies the mixed signal by the adjustment parameter Vm.

Similarly, the frequency-range-separated level adjusting unit 24L obtains the low-range component signal S1L of the audio signal S1 from the frequency range dividing filter 21A and obtains the low-range component signal S2L of the audio signal S2 from the frequency range dividing filter 21B. In addition, the frequency-range-separated level adjusting unit 24L obtains the mixing ratio information MP and the adjustment parameter Vl from the optimum mixing level calculating unit 22. Then, the frequency-range-separated level adjusting unit 24L mixes the low-range component signal S1L of the audio signal S1 and the low-range component signal S2L of the audio signal S2 by the mixing ratio indicated by the mixing ratio information MP, and multiplies the mixed signal by the adjustment parameter Vl.

In this way, the frequency-range-separated level adjusting units 24H, 24M and 24L mix the components of each of the frequency ranges of the audio signals S1 and S2 by the mixing ratio indicated by the mixing ratio information MP, and then performs the level adjustment of the mixed signals based on the adjustment parameters Vh, Vm and Vl separately determined for each of the frequency ranges. Here, since the adjustment parameters Vh, Vm and Vl are determined such that the inter-frequency-range variation ratio becomes 1:1:1 as described above, the signal level of each of the frequency ranges after the level adjustment maintains the balance of the signal level of each of the frequency ranges before the mixing.

Then, the adder 25 adds the mixed signals of each of the frequency ranges, outputted from the frequency-range-separated level adjusting units 24H, 24M and 24L, to output the added signal as a mixed audio signal.

As described above, the audio signal mixing device calculates the adjustment parameter for each of the frequency ranges so as to maintain the level balance between the frequency ranges before and after the mixing, adds the signals subjected to the level adjustment by the adjustment parameters separately for each of the frequency ranges, and outputs the added signal as the mixed audio signal. Thereby, the audio signal mixing device can generate the mixed audio signal maintaining the level balance between the frequency ranges.

In the above configuration, the optimum mixing level calculating unit 22 functions as a mixing ratio obtaining unit, an adjustment amount determining unit, a level variation ratio calculating unit, an analyzing unit and a level information obtaining unit of the present invention. The frequency-range-separated level adjusting units 24H, 24M and 24L function as a signal mixing unit and a level adjusting unit of the present invention, and the adder 25 functions as an adding unit of the present invention.

[Audio Signal Mixing Method of 1st Embodiment]

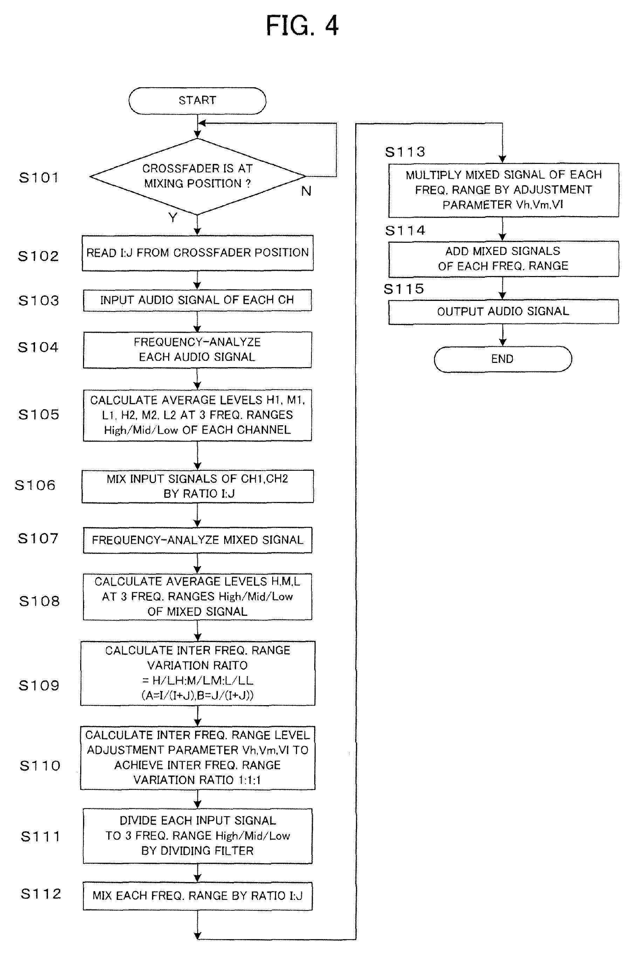

Next, the audio signal mixing method of the first embodiment will be described with reference to the flowchart of FIG. 4.

First, the microcomputer 4 detects the position of the crossfader 5. When the position of the crossfader 5 is the mixing position (step S101; Yes), the microcomputer 4 transmits the position information of the crossfader 5 to the DSP 2A as the mixing ratio information MP (step S102). Here, the "mixing position" means a position other than the both end positions of the crossfader.

Then, the DSP 2A obtains the audio signal of each channel (step S103), and the optimum mixing level calculating unit 22 performs the frequency characteristic analysis on the audio signals (step S104).

Then, the optimum mixing level calculating unit 22 calculates the average levels at three frequency ranges, i.e., the high-range, the mid-range and the low-range, of the audio signal of each channel. Specifically, the optimum mixing level calculating unit 22 calculates the high-range average level H1, the mid-range average level M1 and the low-range average level L1 for the audio signal S1, and calculates the high-range average level H2, the mid-range average level M2 and the low-range average level L2 for the audio signal S2.

Next, the optimum mixing level calculating unit 22 mixes the audio signal of each channel by the mixing ratio (I: J) indicated by the mixing ratio information MP to generate the mixed signal (step S106).

Next, the optimum mixing level calculating unit 22 performs the frequency characteristic analysis on the mixed signal (step S107), and calculates the average levels of three frequency ranges of the mixed signal, i.e., the low-range average level L, the mid-range average level M and the high-range average level H (step S108).

Then, the optimum mixing level calculating unit 22 calculates the inter-frequency-range variation ratio H/LH : M/LM : L/LL (step S109), calculates the adjustment parameters Vh, Vm and Vl such that the znter-frequency-range variation ratio becomes 1:1:1 (step S110), and transmits those adjustment parameters to each of the frequency-range-separated level adjusting units 24H, 24M and 24L.

Meanwhile, the frequency range dividing filters 21A and 21B divide each of the inputted signals into three frequency ranges, and transmits the signal of each frequency range to the frequency-range-separated level adjusting units 24H, 24M and 24L (step S111).

The frequency-range-separated level adjusting units 24H, 24M and 24L mix the obtained signals by the mixing ratio (I:J) indicated by the mixing ratio information MP (step S112). Then, the frequency-range-separated level adjusting units 24H, 24M and 24L multiply the mixed signal by the adjustment parameters Vh, Vm and Vl (step S113). The adder 25 adds the signals outputted by the frequency-range-separated level adjusting units 24H, 24M and 24L (step S114), and outputs it as the mixed audio signal of overall frequency range (step S115). Thus, the process ends.

[2nd Embodiment]

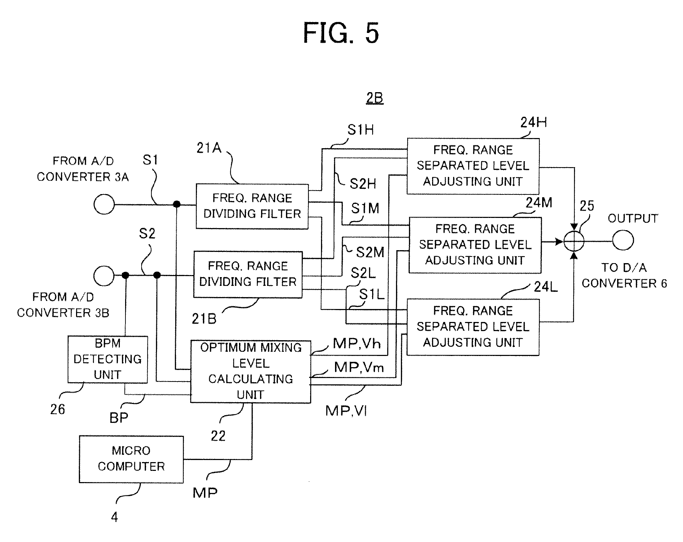

Next, a second embodiment of the present invention will be described. FIG. 5 illustrates a schematic configuration of an inside of a DSP 2B of the audio signal mixing device according to the second embodiment. The same reference number is applied to the constitutional element same as that in the DSP 2A of the first embodiment illustrated in FIG. 1 and its explanation will be omitted.

The DSP 2B of the audio signal mixing device 1 according to the second embodiment has a BPM detecting unit 26, but other elements are basically the same as those of the DSP 2A according to the first embodiment. The BPM detecting unit 26 functions as a beat detecting unit of the present invention.

The BPM detecting unit 26 detects a BPM (Beat Per Minute) of the audio signal S2. Specifically, the BPM detecting unit 26 detects the position of the beat in the audio signal S2, e.g., a part at which the low-range level rapidly increases, and notifies it to the optimum mixing level calculating unit 22. The optimum mixing level calculating unit 22 determines a constant time period including the position of the beat as an adjustment object time period, and generates the adjustment parameters Vh, Vm and Vl such that the inter-frequency-range variation ratio becomes 1:1:1, by the same method as that of the first embodiment, based on the audio signals S1 and S2 in the adjustment object time period. The optimum mixing level calculating unit 22 sets all the adjustment parameters Vh, Vm and Vl to "1" in the time period other than the adjustment object time period. The optimum mixing level calculating unit 22 transmits the adjustment parameters Vh, Vm and Vl thus generated to the frequency-range-separated level adjusting units 24H, 24M and 24L.

In this way, in the second embodiment, the BPM detecting unit 26 detects the position of the beat where generally the level balance between the frequency ranges is easily lost before and after mixing the signals, and the level adjustment using the adjustment parameters is performed only in the adjustment object time period around the position of the beat. On the contrary, in the time period other than the adjustment object time period, the values of the adjustment parameters are all set to "1" and the level adjustment is not substantially performed. Namely, in the second embodiment, the audio signal mixing device calculates the adjustment parameters to perform the level adjustment separately for each of the frequency ranges only when the inter-frequency-range level balance is easily lost, and does not perform the level adjustment in other time period. Therefore, it is possible to prevent that the inter-frequency-range level balance is lost before and after mixing the signals and to minimize the burden on the calculating process of the adjustment parameters and the level adjustment process between the frequency ranges.

[3rd Embodiment]

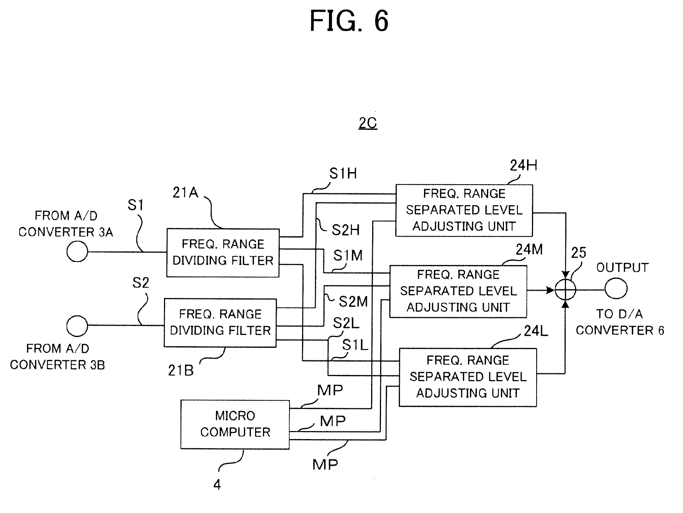

Next, a third embodiment of the present invention will be described. FIG. 6 illustrates a schematic configuration of an inside of a DSP 2C of the audio signal mixing device according to the third embodiment. The same reference number is applied to the constitutional element same as that in the DSP 2A of the first embodiment illustrated in FIG. 1 and its explanation will be omitted. The DSP 2C of the audio signal mixing device 1 according to the third embodiment does not include the optimum mixing level calculating unit 22 provided in the DSP 2A of the first embodiment.

In the third embodiment, the frequency-range-separated level adjusting units 24H, 24M and 24L mix the audio signals S1 and S1 separately for each of the frequency ranges based on the mixing ratio information MP, and then multiply the mixed signals by the adjustment parameters determined in advance (hereinafter referred to as "default adjustment parameters") separately for each of the frequency ranges. Then, the adder 25 adds the signals obtained by multiplying the default adjustment parameters separately for each of the frequency ranges to output it as the mixed audio signal.

Here, an example of determining the default adjustment parameters will be described. Considering the multiple audio signals subjected to the mixing, generally the low-range components have relatively high correlation and it is supposed that its level increases to a certain extent after the mixing. In contrast, the mid/high-range components have smaller correlation than the low-range components, and it is supposed that the level increase after the mixing is smaller than that of the low-range components. In this view, it is presumed that the level of the low-range component increases about 6 dB and the level of the mid/high-range component increases about 3dB by mixing the signals, the default adjustment parameters are determined such that the level of the low-range component is decreased about 3 dB larger than the level of the mid/high-range component. Thus, the level balance for each of the frequency ranges can be maintained after mixing the signals. It is noted that the above values are mere examples and may be appropriately determined in accordance with kinds or the like of the music pieces to be mixed.

In the case of the audio signal mixing device 1 according to the third embodiment, differently from the first and the second embodiments, the level adjustment is performed for each of the frequency ranges by using the default adjustment parameters determined in advance, without analyzing the audio signals to be mixed. By this, the configuration of the device can be simplified, and it becomes possible to realize the audio signal mixing device capable of adjusting the inter-frequency-range level balance for by an apparatus in which high-performance electronic parts such as a DSP cannot used and which mainly uses analog circuits.

As described above, since the audio signal mixing device 1 according to the present invention outputs the mixed audio signal after performing the balance adjustment between the levels of different frequency ranges at the time of mixing multiple audio signals, it can output mixed audio signal that does not give a user wrong feeling.

The audio signal mixing device according to the prior art can smoothly mix the music pieces by using a single operating part, while adjusting the levels of the music pieces to be mixed according to the position of the operating part being operated. However, when a disk jockey (DJ) actually performs the mixing by operating the operating part in order to connect music pieces, he or she mostly decreases the low-range level of one of the music pieces by operating the equalizer lever or the like to avoid the interference. This is a technique that the DJ naturally learns in order to avoid such a wrong feeling that the sound pressure in the low-range relatively increases when the music pieces are mixed and the sound pressure difference between the frequency ranges vary. In order to perform the mixing without wrong feeling more simply, it is effective to detect the level variation ratio for each frequency range before and after mixing the signals to correct the levels like the present invention. By this, it is possible to perform mixing play by using a single operating part without wrong feeling.

[Modified Examples]

In the above-described first embodiment, the frequency characteristic analysis of the input signals is performed on the real-time basis to calculate the average level of each of the frequency ranges. However, the present invention is not limited to this. The frequency characteristic data prepared in advance may be obtained from other PC (Personal Computer) or the like. In this case, the audio signal mixing device 1 does not have to perform the frequency characteristic analysis, and therefore the processing burden of the device can be diminished.

In the above-described embodiments, the audio signal is divided into three frequency ranges. However, the present invention is not limited to this. The audio signals subjected to the mixing may be divided into two or four frequency ranges to perform the level balance adjustment between those frequency ranges.

In the above-described embodiments, the audio signal mixing device 1 mixes two audio signals. However, the present invention is not limited to this, and three or more audio signals may be mixed.

In the above-described embodiments, the user uses the crossfader to instruct or input the mixing ratio. However, the present invention is not limited to this, and the user may instruct the mixing ratio by other various operations.

INDUSTRIAL APPLICABILITY

This invention can be used formixingmultiple audio signals by a DJ equipment, a business-use sound mixer, a home-use recording equipment and a PC application.

**Claims**

1.  An audio signal mixing device comprising:

     an audio signal obtaining unit which obtains multiple audio signals;
     a mixing ratio obtaining unit which obtains a mixing ratio of the multiple audio signals;
     an adjustment amount determining unit which determines an adjustment amount of a level for each of frequency ranges in a case that the multiple audio signals are mixed by the mixing ratio;
     a signal mixing unit which mixes the multiple audio signals by the mixing ratio separately for each of the frequency ranges, and outputs a mixed signal for each of the frequency ranges;
     a level adjusting unit which performs a level adjustment of the mixed signal for each of the frequency ranges based on the adjustment amount; and
     an adding unit which adds the signals of each of the frequency ranges, after the level adjustment by the level adjusting unit, to output as a mixed audio signal.

2.  The audio signal mixing device according to claim 1, further comprising:

     an analyzing unit which analyzes frequency characteristics of the multiple audio signals and obtains level information for each of the frequency ranges; and

a level variation ratio calculating unit which calculates a level variation ratio for each of the frequency ranges in a case that the multiple audio signals are mixed by the mixing ratio, by using the level information for each of the frequency ranges,

wherein the adjustment amount determining unit determines the adjustment amount based on the level variation ratio.

3. The audio signal mixing device according to claim 2, further comprising a beat position detecting unit which detects a beat position based on the multiple audio signals,

wherein the level adjusting unit performs the level adjustment in a predetermined time period including the beat position.

4. The audio signal mixing device according to claim 1, further comprising:

a level information obtaining unit which obtains the level information of each of the frequency ranges based on the frequency characteristics of the multiple audio signals; and

a level variation ratio calculating unit which calculates the level variation ratio for each of the frequency ranges in a case that the multiple audio signals are mixed by the mixing ratio, by using the level information for each of the frequency ranges,

wherein the adjustment amount determining unit determines the adjustment amount based on the level variation ratio.

5. The audio signal mixing device according to claim 1, wherein the adjustment amount determining unit retains the adjustment amounts determined in advance.

6. An audio signal mixing method for mixing multiple audio signals, comprising:

an audio signal obtaining process which obtains the multiple audio signals;

a mixing ratio obtaining process which obtains a mixing ratio of the multiple audio signals;

an adjustment amount determining process which determines an adjustment amount of a level for each of frequency ranges in a case that the multiple audio signals are mixed by the mixing ratio;

a signal mixing process which mixes the multiple audio signals by the mixing ratio separately for each of the frequency ranges, and outputs a mixed signal for each of the frequency ranges;

a level adjusting process which performs a level adjustment of the mixed signal for each of the frequency ranges based on the adjustment amount; and

an adding process which adds the signals of each of the frequency ranges, after the level adjustment by the level adjusting process, to output as a mixed audio signal.

# FIG. 1

<u>1</u>

INPUT CH1    INPUT CH2

3A    3B

A/D    A/D

6    OUTPUT

2    DSP    D/A

4    MICROCOMPUTER

5    A    B

CROSSFADER

# FIG. 2

2A

FROM A/D CONVERTER 3A — S1 — 21A

FROM A/D CONVERTER 3B — S2 — 21B

FREQ. RANGE DIVIDING FILTER

FREQ. RANGE DIVIDING FILTER

S1H
S2H
S1M
S2M
S2L
S1L

OPTIMUM MIXING LEVEL CALCULATING UNIT — 22

MICRO COMPUTER — 4

MP

MP,Vh
MP,Vm
MP,Vl

FREQ. RANGE SEPARATED LEVEL ADJUSTING UNIT — 24H

FREQ. RANGE SEPARATED LEVEL ADJUSTING UNIT — 24M

FREQ. RANGE SEPARATED LEVEL ADJUSTING UNIT — 24L

25

OUTPUT

TO D/A CONVERTER 6

FIG. 3A

FIG. 3B

FIG. 3C

# FIG. 4

START

S101 — CROSSFADER IS AT MIXING POSITION ?

N

Y

S102 — READ I:J FROM CROSSFADER POSITION

S103 — INPUT AUDIO SIGNAL OF EACH CH

S104 — FREQUENCY-ANALYZE EACH AUDIO SIGNAL

S105 — CALCULATE AVERAGE LEVELS H1, M1, L1, H2, M2, L2 AT 3 FREQ. RANGES High/Mid/Low OF EACH CHANNEL

S106 — MIX INPUT SIGNALS OF CH1,CH2 BY RATIO I:J

S107 — FREQUENCY-ANALYZE MIXED SIGNAL

S108 — CALCULATE AVERAGE LEVELS H,M,L AT 3 FREQ. RANGES High/Mid/Low OF MIXED SIGNAL

S109 — CALCULATE INTER FREQ. RANGE VARIATION RAITO = H/LH:M/LM:L/LL (A=I/(I+J),B=J/(I+J))

S110 — CALCULATE INTER FREQ. RANGE LEVEL ADJUSTMENT PARAMETER Vh,Vm,Vl TO ACHIEVE INTER FREQ. RANGE VARIATION RATIO 1:1:1

S111 — DIVIDE EACH INPUT SIGNAL TO 3 FREQ. RANGE High/Mid/Low BY DIVIDING FILTER

S112 — MIX EACH FREQ. RANGE BY RATIO I:J

S113 — MULTIPLY MIXED SIGNAL OF EACH FREQ. RANGE BY ADJUSTMENT PARAMETER Vh,Vm,Vl

S114 — ADD MIXED SIGNALS OF EACH FREQ. RANGE

S115 — OUTPUT AUDIO SIGNAL

END

# FIG. 5

# FIG. 6

2C

FROM A/D CONVERTER 3A ○ — S1 → 21A FREQ. RANGE DIVIDING FILTER → S1H, S2H, S1M → 24H FREQ. RANGE SEPARATED LEVEL ADJUSTING UNIT

FROM A/D CONVERTER 3B ○ — S2 → 21B FREQ. RANGE DIVIDING FILTER → S2M, S2L, S1L → 24M FREQ. RANGE SEPARATED LEVEL ADJUSTING UNIT

24L FREQ. RANGE SEPARATED LEVEL ADJUSTING UNIT

MICRO COMPUTER 4 → MP, MP, MP

25 → OUTPUT ○ TO D/A CONVERTER 6

## INTERNATIONAL SEARCH REPORT

| | International application No. |
|---|---|
| | PCT/JP2009/052314 |

A.  CLASSIFICATION OF SUBJECT MATTER
*H04R3/00*(2006.01)i, *G11B20/02*(2006.01)i, *G11B27/02*(2006.01)i

According to International Patent Classification (IPC) or to both national classification and IPC

B.  FIELDS SEARCHED

Minimum documentation searched (classification system followed by classification symbols)
H04R3/00, G11B20/02, G11B27/02

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho    1971-2009   Toroku Jitsuyo Shinan Koho   1994-2009

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 1996-195068 A  (Pioneer Corp.),<br>30 July, 1996 (30.07.96),<br>Par. Nos. [0007] to [0015]; Figs. 1 to 3<br>& US 6301365 B1        & US 2002/0029088 A1<br>& US 2001/0055401 A1 | 1-6 |
| A | JP 1993-291839 A  (Sony Corp.),<br>05 November, 1993 (05.11.93),<br>Par. Nos. [0031] to [0039]; Fig. 1<br>(Family: none) | 1-6 |
| A | JP 2005-292317 A  (Kabushiki Kaisha Denon),<br>20 October, 2005 (20.10.05),<br>Par. Nos. [0014], [0019]; Fig. 1<br>(Family: none) | 3 |

☐  Further documents are listed in the continuation of Box C.       ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 April, 2009 (22.04.09) | 12 May, 2009 (12.05.09) |

| Name and mailing address of the ISA/<br>Japanese Patent Office | Authorized officer |
|---|---|
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H08195068 B